# FASCICULE DE BREVET EUROPEEN

(11) **EP 3 280 560 B1**
(45) Date de publication et mention de la délivrance du brevet: **03.04.2019**
(21) Numéro de dépôt: 16720883.4
(22) Date de dépôt: 07.04.2016
(51) Int. Cl.: B22F 3/105, H05B 6/10, H05B 6/14, B22F 7/06, B23K 13/01, B23K 35/02, B33Y 10/00, B33Y 30/00, B29C 64/106, B29C 64/20

(54) **DISPOSITIF D'IMPRESSION EN TROIS DIMENSIONS UTILISANT DES DISPOSITIFS INDUCTIFS ET RESISTIFS**
DREIDIMENSIONALE DRUCKVORRICHTUNG MIT INDUKTIVEN UND WIDERSTANDSVORRICHTUNGEN
THREE-DIMENSIONAL PRINTING DEVICE USING INDUCTIVE AND RESISTIVE DEVICES

(30) Priorité: 07.04.2015 FR 1500715; 21.08.2015 FR 1557850
(43) Date de publication de la demande: 14.02.2018
(73) Titulaire: Eder Numero 1, 56190 Ambon (FR)
(72) Inventeur: WILLMANN, Etienne, 56190 Lauzach (FR)
(74) Mandataire: Novagraaf Technologies
(86) Numéro de dépôt international: PCT/FR2016/050793
(87) Numéro de publication internationale: WO 2016/162637

(56) Documents cités:
- CN-A- 103 862 046

## Description

L'invention concerne un dispositif d'impression en trois dimensions d'une pièce à partir d'un matériau d'impression ou d'un ensemble de matériaux d'impression.

Dans le cadre de l'utilisation de matériaux d'impression ferromagnétiques, les températures de fusion sont élevées, de plusieurs centaines de degrés à plusieurs milliers de degrés. Du fait de leur composition, les matériaux ferromagnétiques, lors de leur mise en oeuvre lors d'une fusion, sont sensibles à toute oxydation qui entraine alors une dégradation de la pièce ainsi réalisée, par une dégradation de la soudure entre le filament fondu ou en fusion et une surface de dépose de la pièce à réaliser en cours d'élaboration. Il est connu de réaliser le dépôt d'un filament fondu ou en fusion de matériau d'impression dans une enceinte à atmosphère contrôlée. Toutefois, une telle enceinte n'est pas parfaitement étanche et ne permet donc pas d'assurer la présence seule d'un gaz inerte dans le voisinage du filament fondu ou en fusion de matériau d'impression ferromagnétique.

La demande de brevet chinois CN103862046 divulgue un dispositif d'impression en trois dimensions comprenant des moyens d'alimentation en un matériau d'impression et des moyens permettant la fusion du matériau d'impression avant pose et une buse de diffusion de gaz inerte au niveau d'une sortie des moyens d'alimentation. Ce dispositif d'impression ne comporte qu'une seule buse de diffusion.

Un but de l'invention est de fournir un dispositif d'impression en trois dimensions d'une pièce à réaliser par un procédé de dépôt de filament fondu ou en fusion de matériau d'impression ferromagnétique qui permette d'obtenir une soudure optimale entre le filament fondu ou en fusion et la surface de dépose recevant ce filament de la pièce en cours d'élaboration.

A cette fin, il est prévu selon l'invention, un dispositif d'impression en trois dimensions d'une pièce à réaliser comprenant une tête d'impression comportant :
- des moyens d'alimentation en un matériau d'impression ferromagnétique ;
- des moyens permettant la fusion du matériau d'impression avant pose ;
- une première buse de diffusion de gaz inerte au niveau d'une sortie des moyens d'alimentation ;
- une deuxième buse de diffusion de gaz inerte au niveau d'un point de contact du matériau d'impression en fusion d'une surface de réception de la pièce à réaliser en cours d'élaboration permettant un apport du gaz à une pression souhaitée.

Avantageusement, mais facultativement, le dispositif d'impression selon l'invention comporte au moins l'une des caractéristiques techniques additionnelles suivantes :
- les moyens permettant la fusion comprennent un premier moyen de chauffage par induction du matériau d'impression ;
- le premier moyen de chauffage par induction est agencé de sorte à permettre un chauffage d'une surface de dépose du matériau d'impression en fusion de la pièce à réaliser en cours d'élaboration ;
- les moyens permettant la fusion comportent un deuxième moyen de chauffage par induction d'une surface de dépose du matériau d'impression en fusion de la pièce à réaliser en cours d'élaboration ;
- le premier et/ou le deuxième moyen de chauffage par induction entoure une sortie des moyens d'alimentation en matériau d'impression ;
- le premier et/ou le deuxième moyen de chauffage par induction s'étend uniquement devant une sortie des moyens d'alimentation en matériau d'impression et présente une forme de « U » à 90° d'un sens d'avancée de la tête d'impression en utilisation ;
- le premier et/ou le deuxième moyen de chauffage par induction présente une forme en fer à cheval se positionnant devant et en partie autour d'une sortie des moyens d'alimentation en matériau d'impression ;
- les premier et/ou deuxième moyens de chauffage par induction sont positionnées devant et/ou derrière et/ou sur les côtés des moyens d'alimentation en un matériau d'impression ;
- le premier et/ou le deuxième moyen de chauffage par induction est agencé de sorte à permettre une dépose du matériau d'impression sous un angle d'incidence quelconque ;
- les moyens permettant la fusion comprennent un moyen d'alimentation en courant dont une borne est connectée au matériau d'impression et une autre borne est connectée à la pièce à réaliser en cours d'élaboration ;
- les moyens d'alimentation en matériau d'impression comprennent un ou plusieurs conduits d'amenée de matériau d'impression ;
- le dispositif comporte deux ou plus têtes d'impression ;
- le matériau d'impression est sous la forme d'une poudre ;
- les moyens d'alimentation en matériau d'impression comportent une buse de projection de poudre ;
- la poudre formant le matériau d'impression est propulsé par un gaz inerte ;
- le matériau d'impression est sous la forme d'un fil ;
- le matériau d'impression est un matériau ferromagnétique et ou magnéto-diélectrique ;
- la tête d'impression comporte des moyens d'apport d'un matériau de renfort sous la forme d'un fil ou d'un ruban agencés de sorte à poser le matériau de renfort sur une surface de dépose du matériau d'impression en fusion de la pièce à réaliser en cours d'élaboration, en amont d'un point de dépose du matériau d'impression en fusion de la surface de dépose ;
- la première buse de diffusion de gaz inerte est agencée de sorte à être orientable, notamment afin de pouvoir orienter un flux de gaz inerte dans un sens d'avancée de la tête d'impression ;
- les moyens d'alimentation en matériau et/ou les moyens d'apport d'un matériau de renfort comprennent des moyens de mise sous gaz inerte des matériaux en utilisation ;
- le dispositif comporte des moyens de régulation de diffusion de gaz inerte ;
- le dispositif comporte des moyens de refroidissement de tout ou partie de la tête d'impression ;
- les moyens permettant la fusion du matériau d'impression, la première buse de diffusion de gaz inerte et la deuxième buse de diffusion de gaz inerte sont montés mobiles par rapport aux moyens d'alimentation en matériau d'impression ; et,
- le dispositif comporte un ou plusieurs inducteurs associés à un ou plusieurs dispositifs d'induction positionnés soit devant, derrière, sur les côtés de la tête d'impression.

Il est aussi prévu, selon l'invention une utilisation d'un dispositif présentant au moins l'une des caractéristiques techniques précédentes pour assembler deux ou plus pièces existante par une dépose de matériau d'impression à une jonction entre les deux ou plus pièces.

D'autres caractéristiques et avantages de l'invention apparaîtront lors de la description ci-après de modes de réalisation. Aux dessins annexés :
- la figure 1 est une vue schématique d'un dispositif d'impression selon l'invention utilisant un matériau d'impression sous la forme d'un fil ;
- la figure 2 est une vue schématique d'un dispositif d'impression selon l'invention utilisant un matériau d'impression sous la forme d'une poudre ;
- la figure 3 est une vue schématique du dispositif d'impression de la figure 1 couplé à un système de fourniture de matériau de renfort pour la réalisation d'une pièce en matériaux composites.

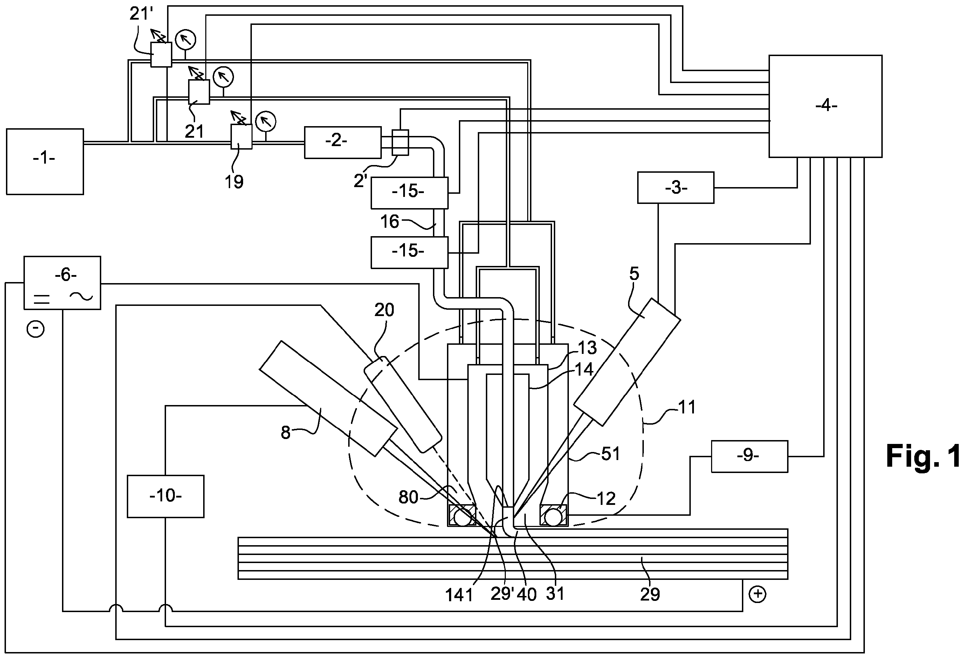

En référence la figure 1, nous allons décrire un premier mode de réalisation d'un dispositif d'impression en trois dimensions selon l'invention utilisant un matériau d'impression sous la forme d'un fil le principe d'apport de fil. Le dispositif d'impression en trois dimensions selon l'invention comporte :
- des moyens de contrôle et de pilotage 4, ici, sous la forme d'une carte électronique de contrôle et de pilotage.
- des moyens de stockage 1 de gaz inerte qui va permettre de générer une atmosphère contrôlée de gaz inerte au niveau de la dépose du matériau en fusion 29' sur une pièce 29 en cours d'élaboration.
- un (ou plusieurs) dévidoir(s) 2 dans le(s)quel(s) se trouve(nt) stocké(s) le (ou les) matériau(x) d'impression sous forme de fil qui vont être ensuite déroulés jusqu'à une ou plusieurs têtes d'impression 11 du dispositif d'impression en trois dimensions selon l'invention. En sortie du dévidoir 2, un moyen de contrôle de présence de fil 2' est positionné et connecté aux moyens de contrôle et de pilotage 4 auxquels il informe de la présence d'un fil dans le dévidoir 2. De plus le dévidoir est connecté aux moyens de stockage 1 de gaz inerte via un premier poste de détente 19. Cela permet, dès le début, de mettre le matériau d'impression sous forme de fil dans une atmosphère contrôlée de gaz inerte.
- un ou des moteurs 15 permettant l'apport d'un ou des matériaux d'impression sous forme de fils du dévidoir 2 à la tête d'impression 11 de manière précise. Les moteurs 15 sont reliés pour être pilotés aux moyens de contrôle et de pilotage 4. Les moteurs 15 permettent l'entrainement du matériau d'impression sous forme de fil au sein d'un conduit ou tube d'amenée 16. En variante de réalisation, il est possible de prévoir un ou plusieurs moyen de contrôle de présence de fil, similaire au moyen de contrôle de présence de fil 2', à plusieurs endroits du conduit d'amenée 16 jusqu'à la tête d'impression 11 en fonction des choix techniques effectués pour l'impression d'une pièce 29 par le dispositif d'impression en trois dimensions selon l'invention.
- une tête d'impression 11.

La tête d'impression 11 comporte une première buse de diffusion de gaz inerte 13. Elle comporte en outre un tube de descente de fil 14 et un inducteur 12. Le tube de descente de fil 14 est directement connecté au conduit d'amenée 16 du matériau d'impression sous forme de fil. Le tube de descente de fil 14 forme, avec le conduit d'amenée 16, les moteurs 15 et le dévidoir 2, des moyens d'alimentation du dispositif d'impression en trois dimensions selon l'invention. Le tube de descente de fil 14 comporte une extrémité ouverte 141 formant une sortie du matériau d'impression sous forme de fil des moyens d'alimentation. La première buse de diffusion de gaz inerte 13 englobe ici le tube de descente de fil 14 et comporte une sortie d'éjection 31 qui éjecte le gaz inerte au niveau de la sortie 141 des moyens d'alimentation du dispositif d'impression en trois dimensions selon l'invention. La première buse de diffusion de gaz inerte 13 peut, en variante de réalisation, comprendre un système de refroidissement. La première buse de diffusion de gaz inerte 13 est connectée fluidiquement aux moyens de stockage de gaz inerte 2 via un deuxième poste de détente 21. Ainsi, la première buse de diffusion de gaz inerte 13 permet une diffusion de gaz inerte vers une zone en fusion 29' du matériau d'impression sous forme de fil. La première buse de diffusion de gaz inerte 13 permet une maîtrise de l'environnement atmosphérique, ainsi contrôlé, de la zone de fusion 29'. La présence de gaz inerte dans cet environnement permet d'éviter une modification ou la dégradation du matériau d'impression en fusion, par oxydation par exemple.
Au surplus, le tube de descente de fil 14 est éventuellement refroidi, si besoin est, par un système de refroidissement (non représenté) comme un réseau d'eau ou tout autre fluide caloriporteur.

L'inducteur 12 est monté, ici, de manière étanche sur une périphérie externe de la sortie d'éjection 31 de la première buse de diffusion de gaz inerte 13. L'inducteur 12 se trouve ainsi légèrement sous la sortie 141 du tube de descente de fil 14. L'inducteur 12 peut comporter ou non des matériaux magnéto diélectriques permettant de maîtriser une forme du flux magnétique généré ainsi que de piloter la concentration du flux magnétique qu'il génère en fonctionnement à l'endroit souhaité. L'inducteur 12 peut présenter différentes formes. Une première forme entoure le tube de descentes de fil 14 au niveau de la sortie d'éjection de la première buse de diffusion de gaz inerte 13. Une deuxième forme possible permet à l'inducteur 12 de s'étendre uniquement devant la sortie 141 du tube de descente de fil 14 lors d'une avancée de la tête d'impression 11 du dispositif d'impression en trois dimensions selon l'invention par rapport à la pièce en cours d'élaboration 29, l'inducteur 12 pouvant présenté une forme de « U » positionnée à 90° par rapport à une direction d'avancée de la tête d'impression 11. Une troisième forme possible est une forme de fer à cheval se positionnant devant et en partie autour de la sortie 141 du tube de descente 14. D'autres solutions de forme sont possibles. L'inducteur 12 peut être positionné devant et/ou derrière le dépôt de fil. L'inducteur 12 est commandé par un dispositif d'induction 9 auquel il est relié. Le dispositif d'induction est lui-même piloté par les moyens de contrôle et de pilotage auquel il est relié. Il est aussi possible, selon les choix techniques effectués, de disposer d'un ou plusieurs inducteurs 12 et d'un ou plusieurs dispositif d'induction 9 soit devant, derrière, sur les côtés de la tête d'impression 11 du dispositif d'impression en trois dimensions selon l'invention, cette solution permettant, en fonction des impressions réalisées, de faire varier les températures souhaitées sur la zone de fusion 29' du matériau d'impression en forme de fil et sur la pièce en cours d'élaboration 29.

D'autre part, afin de protéger la pièce en cours d'élaboration 29 lors de son échauffement par l'inducteur 12, et donc de la mettre dans une atmosphère contrôlée comprenant un gaz inerte, il est possible de créer un nouveau réseau de gaz inerte similaire à celui de la première buse de diffusion de gaz 13, ladite première buse de diffusion de gaz 13 ainsi que l'inducteur 12 se trouvant donc à l'intérieur de nouveau réseau de gaz inerte. A cette fin, la tête d'impression 11 du dispositif d'impression en trois dimensions selon l'invention comprend une deuxième buse de diffusion de gaz inerte 51 comportant une sortie d'éjection 80 de gaz inerte qui permet une éjection de gaz inerte préalablement à la chauffe par l'inducteur 12. La deuxième buse de diffusion de gaz inerte 51 est connectée fluidiquement aux moyens de stockage de gaz inerte 1 via un troisième poste de détente 21'. Le gaz inerte est alors projeté autour et sur la zone de dépose 40 de la pièce en cours de réalisation 29. Ainsi, la deuxième buse de diffusion de gaz inerte 51 fournit un circuit de diffusion du gaz autour de la partie extérieure de l'inducteur 12, permettant de disposer d'une atmosphère contrôlée de gaz inerte autour de la tête d'impression 11 du dispositif d'impression en trois dimensions selon l'invention. La deuxième buse de diffusion de gaz inerte 51 peut, en variante de réalisation, comprendre un système de refroidissement.

De plus, le dispositif d'impression en trois dimensions selon l'invention comporte un générateur de courant 6 qui permet de fournir un courant continu avec un faible ou fort ampérage. Il est relié au tube de descente de fil 14 et contrôlé par les moyens de contrôle et de pilotage 4 afin de maîtriser le voltage et l'ampérage demandés. Si nécessaire, le générateur de courant 6 peut aussi fournir un courant alternatif. Le générateur de courant 6 est relié depuis une de ses bornes au tube de descente de fil 14 par un premier câble dédié et depuis l'autre de ses bornes à la pièce en cours d'élaboration 29 par un deuxième câble dédié. Ainsi, le courant généré par le générateur de courant 6 traverse le matériau d'impression sous forme de fil afin de mettre ledit matériau d'impression sous forme de fil en fusion au moins au niveau de la zone de fusion 29',ce dernier se solidifiant aussitôt au point de la zone de dépose 40 de la pièce en cours d'élaboration 29 : le tube de descente de fil 14 est alimenté en courant par le générateur de courant 6 et transfère ce courant dans le matériau d'impression sous forme de fil afin de réaliser sa montée finale en température vers une température de fusion au point de contact avec la pièce 29 dudit matériau d'impression sous forme de fil utilisé. Cela est possible si le matériau d'impression est un matériau au moins conducteur de courant électrique.

Afin de pouvoir avoir un contrôle optimal du dépôt de filament fondu ou en fusion de la zone de fusion 29' sur la zone de dépose 40 de la pièce en cours d'élaboration 29, le dispositif d'impression en trois dimensions selon l'invention comporte des moyens de mesures thermiques. Un premier capteur thermique 5 permet, si besoin, de mesurer une température du matériau d'impression au niveau de la sortie 141 du tube de descentes de fil 14. Le capteur 5 peut aussi être utilisé alternativement pour mesurer une température du dépôt suite au passage du fil fondu et fusionné à la pièce 29. Un deuxième capteur thermique 8 permet une mesure d'une température de la pièce en cours d'élaboration 29 juste avant la zone de dépose 40 dans le sens d'une avancée de la tête d'impression 11. Ces deux mesures thermiques ainsi réalisées par les deux capteurs thermiques 5 et 8 permettent le contrôle de la température générée par l'inducteur 12 (et son dispositif d'induction 9) et le générateur de courant 6 via les moyens de contrôle et de pilotage 4. Pour cela, chacun des capteurs thermiques est relié aux moyens de contrôle et de pilotage 4. De plus, chacun des capteurs thermiques 5,8 comporte une alimentation dédiée 3,10.
Au surplus, une mesure de distance de la tête d'impression 11 avec la zone de dépose 40 de la pièce en cours d'élaboration 29 est réalisée par un dispositif de mesure 20 au plus près d'un point de pose de la zone de dépose 40 du matériau d'impression en fusion, ce dispositif de mesure 20 est connecté aux moyens de contrôle et de pilotage 4. Cela permet de maîtriser la distance si besoin est entre la tête d'impression 11 et la pièce en cours d'élaboration 29. L'ensemble des éléments de la tête d'impression 11 et 110 décrits ci-dessus ont la possibilité d'être montés de manière à leurs données une solution rotative ensemble ou séparément afin d'optimiser la fabrication de la pièce en construction.

Grâce au dispositif d'impression en trois dimensions selon l'invention qui vient d'être décrit, nous disposons d'une mise à température prédéterminée de la zone de dépose 40 de la pièce en cours d'élaboration 29 par l'inducteur 12. Ce dernier chauffe la pièce en construction 29 à la température permettant l'apport de fil et la fusion entre les deux au niveau de la zone de dépose 40. L'inducteur 12permet aussi de chauffer le matériau d'impression sous forme de fil au niveau de la zone de fusion 29'. Ce chauffage est complété par un chauffage résistif par le transfert du courant fourni par le générateur de courant 6 du tube de descente 14 vers la pièce en cours d'élaboration 29 lors d'un contact avec celle-ci du matériau d'impression en fusion. Les différentes températures ainsi obtenues permettent une maîtrise de la position de la zone de fusion 29' avec la zone de dépose 40 de la pièce en cours d'élaboration 29. La régulation des différents systèmes de chauffe permet de garantir une forme optimale et continue de la dépose de matériau d'impression. En particulier, suite à la dépose du matériau d'impression sous forme de fil en fusion, la matière déposée se fige. Dans le mode de réalisation illustré à la figure 1, l'inducteur 12, dans sa partie se trouvant en arrière de la dépose par rapport à l'avancée de la tête d'impression 11 ralentit la baisse des gradients de températures de la matière déposée sur la pièce en cours d'élaboration en aval de la zone de dépose 40 selon l'avancée de la tête d'impression. L'inducteur 12, à ce niveau peut permettre une nouvelle fusion momentanée de la couche de matériau d'impression ainsi déposé afin d'optimiser sa cohésion et ou une vitesse de refroidissement de la couche déposée. Dans une variante, l'inducteur 12 se trouve uniquement devant : il préchauffe ainsi la matière par induction et génère la fusion au moment de l'apport de fil en secondant l'apport de chaleur issue du générateur de courant 6.

De manière générale, la tête d'impression 11 du dispositif d'impression en trois dimensions selon l'invention est utilisée afin de déposer le matériau d'impression en fusion à la verticale ou sous un angle donner par rapport à un parcours et à l'avancée de la tête d'impression 11 sur la pièce en cours d'élaboration. Dans le cas illustré à la figure 1, cette position est à 90° mais pourrait varier jusqu'à 45° sur tous les angles et axes souhaités en fonction de la technique d'apport et de l'avancé de la tête d'impression 11. Cette possibilité implique de pouvoir modifier la forme et l'agencement de la tête d'impression 11 et donc de modifier l'emplacement du tube de descente de fil 14, de l'inducteur 12, des différentes buses de diffusion de gaz inerte 13 et 51, des capteurs thermiques 5 et 8 et du dispositif de mesure 20. En particulier, l'inducteur 12 peut être mis soit devant, derrière la dépose du fil en fusion sur la zone de dépose 40. Au surplus, le gaz inerte projeté par la buse de diffusion de gaz inerte 13 peut être orienté au niveau de la sortie d'éjection 31 pour obtenir un sens de projection dudit gaz inerte dans un sens d'avancée de la tête d'impression 11, impliquant une rotation du flux de gaz inerte projeté au niveau de la sortie d'éjection 31 par la buse de diffusion de gaz inerte 13. Pour cela, la première buse de diffusion de gaz inerte 13 est orientable. Le dispositif d'impression en trois dimensions selon l'invention peut être démultiplié afin de déposer plusieurs matériaux d'impression sous forme de fil en même temps, avec un ou plusieurs systèmes inductifs 9,12 en fonction des choix retenus. Le dispositif d'impression en trois dimensions selon l'invention permet aussi des assemblages de matériaux différents et de caractéristiques techniques mécaniques différents soit en utilisant une ce tête d'impression soit avec une tête d'impression associant plusieurs fils. S'il y a plusieurs fils de matériau d'impression, il y aura plusieurs systèmes d'apport et de contrôle.
Dans ce mode de réalisation du dispositif d'impression en trois dimensions selon l'invention, l'ensemble des éléments se trouvant connectés à la tête d'impression 11, à savoir les première 13 et deuxième 51 buses de diffusion d'un gaz inerte, le tube de descente de fil 14, les moteurs 15 et le dévidoir 2 sont sous atmosphère contrôlée avec une pression maîtrisée par les postes de détente 19, 21 et 21'.
Il est à noter qu'en variante de réalisation, un environnement de construction d'une pièce 29 peut se trouver dans une enceinte fermée (non représentée) remplie de gaz inerte dont la spécificité diffère en fonction du matériau d'impression choisi. Dans la mesure où cette enceinte fermée est remplie de gaz inerte et peut être couplée à un système de recyclage des gaz intégré afin de disposer d'une atmosphère de pureté optimale de gaz inerte sur la zone de fusion 29' et de son environnement proche ainsi que sur la zone de dépose 40 du matériau d'impression en fusion sur la pièce en cours d'élaboration 29.

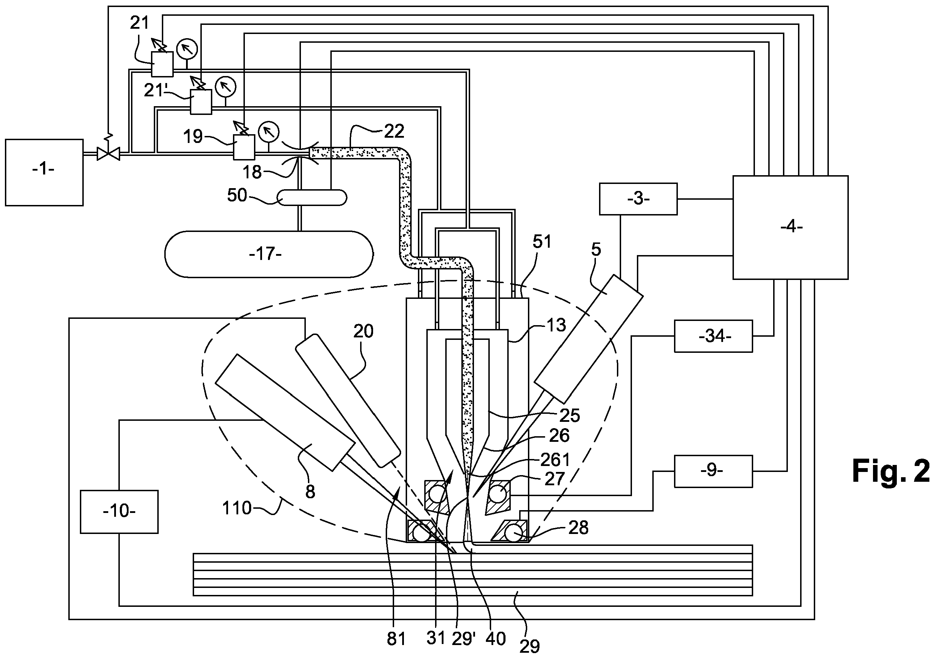

En référence la figure 2, nous allons maintenant décrire un deuxième mode de réalisation d'un dispositif d'impression en trois dimensions selon l'invention utilisant ici un matériau d'impression sous forme de poudre. Les éléments communs de ce mode de réalisation avec le mode de réalisation précédent portent les mêmes références et ne seront pas décrits de nouveau en détails ci-après. Le dispositif d'impression en trois dimensions selon le principe d'apport de poudre figure 2 comporte:
- les moyens de contrôle et de pilotage 4 ;
- les moyens de stockage 1 de gaz inerte permettant de générer une atmosphère contrôlée de gaz inerte au niveau de la dépose du matériau en fusion 29' sur une pièce 29 en cours d'élaboration ;
- des moyens d'aspiration 18 du matériau d'impression sous forme de poudre, par exemple un système Venturi, reliés via le poste de détente 19 aux moyens de stockage 1 de gaz inerte.
- un réservoir de poudre 17 comportant du matériau d'impression sous forme de poudre, le réservoir de poudre 17 étant relié au moyens d'aspiration 18 afin de permettant un mélange de gaz inerte et de matériau d'impression sous forme de poudre, le gaz inerte servant alors de gaz propulseur du matériau d'impression sous forme de poudre dans un conduit d'amenée 22. Cela permet de plus, dès le début, de mettre le matériau d'impression sous forme de fil dans une atmosphère contrôlée de gaz inerte. Le réservoir de poudre 17 dispose, à sa sortie entre le réservoir de poudre 17 et les moyens d'aspiration 18, un système de mesure d'une quantité de poudre 50 restante dans le réservoir de poudre 17. Le système de mesure 50 est équipé d'une vanne de coupure permettant l'arrêt de l'impression et isolant le réservoir de poudre 17 des moyens d'aspiration 18. Pour cela, le système de mesure 50 est connecté aux moyens de contrôle et de pilotage 4.
- Une tête d'impression 110.

La tête d'impression 110 est très similaire dans sa structure que la tête d'impression 11 précédemment décrite en relation avec le premier mode de réalisation du dispositif d'impression en trois dimensions selon l'invention. Ainsi, la tête d'impression 110 comporte la première buse de diffusion de gaz inerte 13. Elle comporte en outre un tube de descente de poudre 25 et un inducteur 27. Le tube de descente de poudre 25 est directement connecté au conduit d'amenée 22 du matériau d'impression sous forme de poudre. Le tube de descente de poudre 25 forme, avec le conduit d'amenée 22, les moyens d'aspiration 18 et le réservoir de poudre 17, des moyens d'alimentation du dispositif d'impression en trois dimensions selon l'invention. Le tube de descente de poudre 25 comporte, à une extrémité ouverte inférieure sur la figure 2, une buse de projection 26 formant une sortie du matériau d'impression sous forme de poudre des moyens d'alimentation. La première buse de diffusion de gaz inerte 13 englobe ici le tube de descente de poudre 24 et la buse de projection 26 et comporte la sortie d'éjection 31 qui éjecte le gaz inerte au niveau d'une sortie 261 de la buse de projection 26 des moyens d'alimentation du dispositif d'impression en trois dimensions selon l'invention. La première buse de diffusion de gaz inerte 13 peut, en variante de réalisation, comprendre un système de refroidissement. La première buse de diffusion de gaz inerte 13 est connectée fluidiquement aux moyens de stockage de gaz inerte 2 via le deuxième poste de détente 21. Ainsi, la première buse de diffusion de gaz inerte 13 permet une diffusion de gaz inerte vers la zone en fusion 29' du matériau d'impression sous forme de poudre. La première buse de diffusion de gaz inerte 13 permet une maîtrise de l'environnement atmosphérique, ainsi contrôlé, de la zone de fusion 29' et de la zone de dépose 40. La présence de gaz inerte dans cet environnement permet d'éviter une modification ou la dégradation du matériau d'impression en fusion, par oxydation par exemple. Au surplus, le tube de descente de poudre 25 et éventuellement la buse de projection 26 sont éventuellement refroidis, si besoin est, par un système de refroidissement (non représenté) comme un réseau d'eau ou tout autre fluide caloriporteur.
En variante, la buse de projection 26 peut avoir une géométrie variable en fonction de la forme souhaitée de dépose et de la distance avec la zone de dépose 40 de la pièce en cours d'élaboration 29. En variante supplémentaire, la buse de projection 26 peut avoir une géométrie variable robotisée afin de faire varier la forme de projection choisie ainsi que de maîtriser la distance avec la zone de dépose 40 de la pièce en cours d'élaboration 29. La buse de projection 26 est de préférence centrée avec l'inducteur 27 que nous allons maintenant décrire.

L'inducteur 27 est monté, ici, de manière étanche sur une périphérie externe de la sortie d'éjection 31 de la première buse de diffusion de gaz inerte 13. L'inducteur 27 se trouve ainsi légèrement sous la sortie 261 de la buse de projection 26 du tube de descente de poudre 25. L'inducteur 27 peut comporter ou non des matériaux magnéto diélectriques permettant de maîtriser une forme du flux magnétique généré ainsi que de piloter la concentration du flux magnétique qu'il génère en fonctionnement à l'endroit souhaité. L'inducteur 27 peut présenter différentes formes comme l'inducteur 12 précédemment décrit dans le cas de la tête d'impression 11 du premier mode de réalisation du dispositif d'impression en trois dimensions selon l'invention. L'inducteur 27 est commandé par un dispositif d'induction 34 auquel il est relié. Le dispositif d'induction 34 est lui-même piloté par les moyens de contrôle et de pilotage 4 auquel il est relié.
la tête d'impression 110 du dispositif d'impression en trois dimensions selon l'invention comprend la deuxième buse de diffusion de gaz inerte 51 comportant une sortie d'éjection 81 de gaz inerte qui permet une éjection de gaz inerte préalablement à la chauffe par l'inducteur 27. La deuxième buse de diffusion de gaz inerte 51 est connectée fluidiquement aux moyens de stockage de gaz inerte 1 via un troisième poste de détente 21'. Le gaz inerte est alors projeté autour et sur la zone de dépose 40 de la pièce en cours de réalisation 29. Ainsi, la deuxième buse de diffusion de gaz inerte 51 fournit un circuit de diffusion du gaz autour de la partie extérieure de l'inducteur 27, permettant de disposer d'une atmosphère contrôlée de gaz inerte autour de la tête d'impression 110 du dispositif d'impression en trois dimensions selon l'invention. La deuxième buse de diffusion de gaz inerte 51 peut, en variante de réalisation, comprendre un système de refroidissement. Ici, dans ce mode de réalisation du dispositif d'impression en trois dimensions selon l'invention, la deuxième buse de diffusion de gaz inerte 51 comporte un deuxième inducteur 28. La forme et la position du deuxième inducteur 28 permet de préchauffer la zone de dépose 40 en amont de la dépose de matériau d'impression fondu et de contrôler le refroidissement de cette même zone de dépose en aval de la dépose de matériau d'impression fondu, et cela selon l'avancée de la tête d'impression 110. Le deuxième inducteur 28 peut être positionné devant uniquement afin de réaliser le préchauffage. D'autres solutions sont possibles : le deuxième inducteur 28 comporte une première partie devant et une deuxième partie derrière. Le deuxième inducteur 28 est commandé par un dispositif d'induction 9 auquel il est relié. Le dispositif d'induction 9 est lui-même piloté par les moyens de contrôle et de pilotage 4 auquel il est relié.

Toutefois, dans ce deuxième mode de réalisation du dispositif d'impression en trois dimensions selon l'invention, les formes des inducteurs 27 et 28 , ainsi que les première 13 et deuxième 51 buses de diffusion de gaz inerte, permettent en plus de maitriser le centrage et la dispersion du matériau d'impression sou forme de poudre entre la buse de projection 26 et la pièce en cours d'élaboration 29. La buse de projection 26 projette un flux de gaz inerte et de matériau d'impression sous forme de poudre vers la zone de dépose 40 de la pièce en cours d'élaboration 29. La première buse de diffusion de gaz inerte 13 confine le gaz inerte et le matériau d'impression sous forme de poudre 30 vers la direction souhaitée de la zone de dépose 40 de la pièce en cours d'élaboration 29, afin de maîtriser la dispersion de la poudre allant vers la pièce en cours d'élaboration 29. En variante, le gaz inerte diffusé par la première buse de diffusion de gaz inerte 13 oriente la projection de poudre vers un point idéal du champ magnétique de l'inducteur 27 pour réaliser une fusion 29' du matériau d'impression sous forme de poudre.
Afin de préserver un flux de poudre linéaire et homogène, le deuxième apport de gaz inerte par la deuxième buse de diffusion de gaz inerte 51 vient contenir la déformation du flux de poudre due par l'action de l'inducteur 27. Dans cette configuration, l'inducteur 28 n'interfère pas avec le matériau d'impression sous forme de poudre à sa sortie de tête d'impression 110 et au moment du contact avec la pièce en cours d'élaboration 29, car le matériau d'impression est en fondu ou en fusion 29'. La deuxième buse de diffusion de gaz inerte 51 distribue un apport de gaz inerte sous l'inducteur 27 et en périphérie de la zone d'impression. Une distance du tube de descentes de poudre 25 sur lequel est montée la buse de projection 26 et le deuxième inducteur 28 peut varier en fonction des choix et caractéristiques techniques du matériau d'impression sous forme de poudre utilisé. Le but est de ne pas faire subir de contraintes comme la répulsion magnétique aux matériaux lors de leur sortie du dispositif de descente ou de projection pour effectuer leur cheminement vers la pièce en construction, contrainte issue du champ magnétique du dispositif inductif en fonctionnement.

Le deuxième mode de réalisation du dispositif d'impression en trois dimensions selon l'invention permet de chauffer le matériau d'impression sous forme de poudre avec l'inducteur 27 et de chauffer la pièce en cours d'élaboration 29 avec l'inducteur 28, les deux températures obtenue avec les deux inducteurs permet la fusion du matériau apporté 29' sur la pièce en cours d'élaboration 29.
En effet, suite à la projection par la buse de projection 26 et de la première buse de diffusion de gaz inerte 13 d'un mélange de gaz/poudre et de gaz inerte (sortie 31), le matériau d'impression sous forme de poudre subit un échauffement par l'inducteur 27 utilisant ou non un matériau magnéto diélectriques permettant la concentration du flux magnétique à l'endroit souhaité (29') faisant passer son point de fusion au matériau d'impression sous forme de poudre. Dans un deuxième temps, le matériau d'impression en fusion subit l'effet de l'inducteur 28 utilisant ou non un matériaux magnéto diélectriques permettant la concentration du flux magnétique à l'endroit souhaité dont l'orientation de travail lui permet de chauffer la pièce en construction 29 et accessoirement ou non le matériau d'impression fondu descendant en fonction de sa distances avec l'inducteur 28. Lors de la mise en contact du matériau d'impression fondu avec la zone de dépose 40 de la pièce en cours d'élaboration 29, la variation de température entre la zone de dépose 40 (sous son point de fusion) et le matériau d'impression fondu (au-dessus de son point de fusion) génère une association optimale du matériau d'impression déposé sur la pièce. Comme précédemment, plusieurs mesures thermiques sont associées au dispositif d'impression en trois dimensions selon l'invention, permettant de maîtriser le processus : une première mesure thermique 5 mesure la température du matériau d'impression sous forme de poudre en fusion 30 suite à son passage dans l'inducteur 27, une deuxième mesure de température 8 est réalisée sur la pièce en cours d'élaboration 29 juste avant la mise en contact d'un matériau d'impression fondu 29' avec la pièce en cours d'élaboration 29.
Dans ce mode de réalisation du dispositif d'impression en trois dimensions selon l'invention, l'ensemble des éléments se trouvant connectés à la tête d'impression 110, à savoir les première 13 et deuxième 51 buses de diffusion de gaz inerte, le tube de descente de poudre 25, le conduit d'amenée 22 ainsi que les réservoir de poudre 17, les moyens d'aspiration 18 et le système de mesure d'une quantité de poudre 50, sont sous atmosphère contrôlée avec une pression maîtrisée par les postes de détente 19, 21 et 21'.

Nous venons de décrire le deuxième mode de réalisation du dispositif d'impression en trois dimensions selon l'invention avec deux inducteurs 27 et 28. Toutefois, le nombre d'inducteurs utilisé ainsi que leur positionnement, leur forme et l'utilisation ou non de matériaux magnéto diélectriques est fonction des choix technique choisis et peuvent varier. Au surplus, le deuxième mode de réalisation du dispositif d'impression en trois dimensions selon l'invention peut compter autant de moyens inductifs, d'apports de gaz, de systèmes de refroidissement, de buses de projection que de tête d'impression.

Dans ce qui précède, les différents inducteurs 12, 27, 28 peuvent être mono spires ou multi spires. Dans le cas d'un inducteur 27 en multi spires, les apports de gaz inerte par les sorties 31 et 81 devront permettre, par exemple, de maîtriser la dispersion de la poudre due au champ magnétique au travers les différentes spires si l'inducteur 27 et les matériaux qui lui sont associés génèrent des cylindres fermés entre les spires. Les moyens de contrôle et de pilotage 4 commandent les dispositifs d'inductions pour alimenter leur inducteur associé avec un courant alternatif de 1Hz à 30 MHz. D'autre part, les différents inducteurs 12, 27, 28 présentent des formes de sorte obtenir des champs inductifs optimaux qui génèrent un ensemble de forces sur le matériau d'impression entre l'extrémité ouverte 141 du tube de descente de fil 14, ou la sortie 261 de la buse de projection 26, selon le mode de réalisation du dispositif d'impression en trois dimensions selon l'invention considéré, et la zone de dépose 40 sur la pièce en cours d'élaboration 29. Dans le cas de plusieurs inducteurs, leurs formes peuvent être associées les unes aux autres de sorte à encore améliorer le champ inductif global obtenu. Les champs magnétiques ainsi obtenus permettent, via les forces de Lorentz, de tenir en forme le matériau d'impression chauffé ainsi que celui déjà déposé sur la zone de dépose 40, permettant ainsi des apports en matériau d'impression qui ne soient pas faits obligatoirement à la verticale mais aussi selon un angle d'incidence quelconque, si besoin est.

De même, le tuyau de descente de fil et pour le tuyau de descente de poudre ainsi que la buse de projection de poudre sont réalisés dans des matériaux comme le cuivre ou des matériaux ayant des propriétés équivalentes, ainsi que des matériaux magnéto diélectriques.

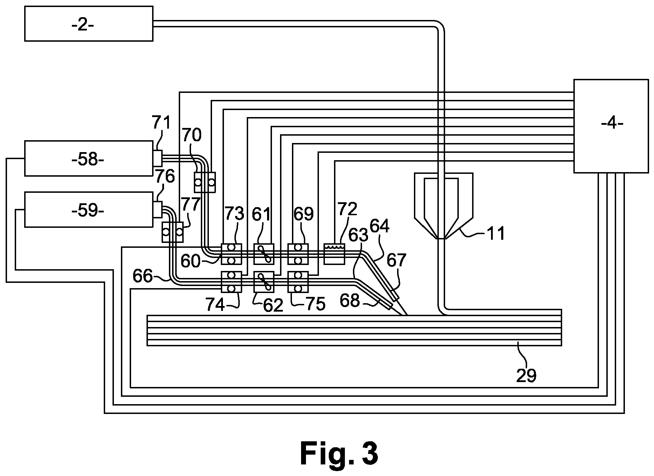

En référence à la figure 3, nous allons décrire un troisième mode de réalisation d'un dispositif d'impression en trois dimensions selon l'invention. Ce troisième mode de réalisation du dispositif d'impression en trois dimensions selon l'invention se base sur les premier et deuxième modes de réalisation du dispositif d'impression en trois dimensions selon l'invention. Le troisième mode de réalisation du dispositif d'impression en trois dimensions selon l'invention est le dispositif d'impression en trois dimensions selon l'invention selon le premier ou le deuxième mode de réalisation précédemment décrit auquel est accouplé un système d'apport de fils ou rubans ferromagnétiques ou non ferromagnétiques permettant une association de matériaux ayant des propriétés mécaniques différentes afin de réaliser une pièce 29 en un matériau composite. Nous allons décrire un troisième mode de réalisation du dispositif d'impression en trois dimensions selon l'invention sur la base du premier mode de réalisation du dispositif d'impression en trois dimensions selon l'invention. L'application au deuxième mode de réalisation du dispositif d'impression en trois dimensions selon l'invention est faite mutatis mutandis.

Le système d'apport de fil ou ruban 67 et 68 comporte, ici, deux tubes d'alimentation 63 et 64 permettant la pose de deux fils ou rubans 67 et 68 en simultané. Les tubes d'alimentation 63 et 64 ont la possibilité de se déplacer autour de la tête d'impression 11 de manière séparée, rotative et ou linéaire en fonction des choix techniques et du nombre de têtes d'impression 11, cette possibilité permet de superposer et/ou de croiser les fils ou ruban 67 et 68 lors de l'avancement de la tête d'impression 11. Le nombre de système d'apport de fil ou rubans ainsi que le nombre d'axes rotatifs ou linéaires varient en fonction du nombre de têtes d'impression 11 et du choix techniques souhaité, nous pouvons donc disposer de d'autant de système d'apport de fil ou ruban que souhaités. Chaque dispositif d'apport de fil ou de ruban comporte un dévidoir 58,59 contenant le ou les de fils ou rubans stockés à distribuer. Le dévidoir 58,59 peut être mis sous atmosphère contrôlée, en les connectant, par exemple, aux moyens de stockage d'un gaz inerte 2. À la sortie du dévidoir 58,59, un dispositif de contrôle de présence de fil ou rubans 71,76 est implanté éventuellement, connecté aux moyens de contrôle et de pilotage 4. Suite au dispositif de contrôle de présence fil ou rubans 71,76, est positionnée un moteur d'entraînement du fil ou rubans 70,77.
Le moteur d'entraînement 70,77 est accouplé à un tube de transport 60,66. Le tube de transport 60,66 est accouplé à un système de coupe du fil ou ruban 61,62. En amont de ce système de coupe du fil ou ruban 61,62, un deuxième moteur d'entraînement 73,74 est positionné pour permettre une maîtrise de la coupe et de l'avancée du fil ou ruban 67,68. Suite au dispositif de coupe 61,62, est positionné un troisième moteur d'entraînement 69,75 permettant une maitrise de la coupe et l'avancement du fil ou ruban 67, 68 coupé dans un tube de transport 63,64, si besoin est. Une fois que le fil ou ruban 67,68 est passé dans le tube de transport 63,64, le fil ou ruban peut être préchauffé via à un système inductif ou résistif de préchauffage 72, afin d'être déposé à une température maîtrisée souhaitée en amont d'un dépôt du matériau d'impression en fusion ou liquéfié sur celui-ci par la tête d'impression 11.
En variante, le dispositif d'impression en trois dimensions selon l'invention selon ce mode de réalisation peut comporter des systèmes d'apport de fils ou rubans pouvant se croiser en se superposant à l'avancée de la tête d'impression. Cela permet de superposer des fils ou rubans sur le matériau déjà posé avant l'apport d'une nouvelle couche du matériau par la tête d'impression. La longueur, la largeur, le diamètre des fils ou rubans va varier en fonction des caractéristiques associations choisies permettant ainsi d'optimiser la cohésion avec la matière déposée.
En variante, le dispositif d'apport de fils ou rubans comporte des moyens de chauffage qui, suite à la pose des fils ou rubans, génèrent une association du fil ou ruban à la couche précédente au moment de la mise en contact avec la pièce 29. Cela permet de positionner le ou les fils ou rubans avant ou après le passage de la tête d'impression en trois dimensions.

L'ensemble du système d'apport de fil ou de rubans ainsi que la coupe de celui-ci peut en variante être réalisé sous atmosphère contrôlée. Un matériau apporté par la tête d'impression peut être un polymère, un matériau composite ou ferromagnétique, la tête d'impression 11 devant être adapté en fonction du matériau.
De même, le dévidoir 58,59 peut être mis sous atmosphère contrôlée si besoin intégrant une étanchéité de l'ensemble du réseau qui se trouver derrière le dévidoir 58,59 jusqu'à l'apport de fil ou ruban au système d'apport de fil ou de ruban 67,68. Il est à préciser si besoin que la buse de diffusion de gaz inerte 13 peut générer un flux de gaz au niveau de sa sortie 141 orienté vers le sens d'avancé de la tête d'impression 11. Le gaz inerte aura donc une projection le faisant ressortir devant la tête de buse.

Les dispositifs d'impression en trois dimensions qui viennent d'être décrit peuvent également être utilisées sur autant d'axes de travail que possible à partir du moment où le démarrage de la pièce à un point fixe. Il peut être monté sur l'extrémité d'un bras de robot multiaxe.

D'autre part, la pièce à réaliser peut être élaboré par le dispositif d'impression en trois dimensions selon l'invention en utilisant un matériau support réalisé en silice qui sert de support pour les parties en contrainte de la pièce à réaliser. Le caractère cassant de la silice permet un retrait facile du support une fois l'impression de la pièce à réaliser terminer.

Le dispositif d'impression en trois dimensions qui vient d'être décrit permet de réaliser des pièces dans un très grand nombre de matériaux ou association de matériaux pouvant être fondus ou mis en fusion pour association de manière simple ou complexe par des inducteurs et/ou par le passage d'un courant de manière résistif. Le ou les matériaux d'impressions utilisés sont donc ferromagnétique et/ou magnéto diélectriques et/ou des polymères ou composite associés à des parties ferromagnétiques.

Dans un variante de réalisation, le dispositif d'impression en trois dimensions selon l'invention comprend des moyens d'usinages agencés de sorte à réaliser, une fois la pose d'une ou de plusieurs couches de matériau d'impression effectuée, un usinage sur tous les axes souhaités afin d'obtenir des surfaces et dimensions voulues, de faire des interventions d'usinage en cours de construction d'une pièce à réaliser quel que soit l'état d'avancement de la pièce à réaliser afin de rectifier ou de mettre à la cote requise et précisions demandées les parties de la pièce déjà construites quel que soit l'axe d'usinage demandé, de finaliser la réalisation de la pièce en fonction des imperfections existantes ou de la précision demandée et sur tous les axes demandés. Une autre solution proposée est l'usinage suite à la finalisation de la pièce.

Le principe d'attache de la pièce en construction 29 sur l'imprimante peut ce faire avec plusieurs principes, une première solution est de fixer la plaque d'attache de la première couche de la pièce 29 par vis à l'imprimante. Une deuxième solution est d'utiliser des boulons attachés au support de l'imprimante afin de créer la construction additive 29 à partir du ou des points d'attache. une troisième solution est de tenir une plaque de construction permettant la pose de la première couche de l'impression additive, la tenue peut se faire par tous moyens permettant de tenir une position fixe, par serrage autour de la plaque de construction par exemple en utilisant des vis et/ou boulons de serrage

Dans une autre variante de réalisation, le dispositif d'impression en trois dimensions selon l'invention comporte un système de préchauffage ou de maitrise de la température d'une partie déjà réalisée de la pièce en cours d'élaboration et comprenant notamment un plateau supportant la pièce en cours dont la température est ainsi maîtrisée par un système de refroidissement ou de montée en température liquide ou par induction ou par rayonnement thermique prévu dans le plateau. Au surplus, le plateau peut disposer de plusieurs axes de positionnement ou et de déplacement afin d'accroître les solutions de réalisation ou étape réalisation.

Le dispositif d'impression en trois dimensions selon l'invention comporte des systèmes de refroidissement de différents éléments comme cela a été décrit précédemment, pour permettre la maîtrise de la température des différents organes du dispositif d'impression, permettant si besoin d'obtenir une température positive ou négative souhaitée de ces organes.

Dans une variante de réalisation, le dispositif d'impression en trois dimensions selon l'invention comprend des moyens de prise d'informations, comme des mesures de forme, permettant des ajustements de l'impression en cours par les moyens de contrôle et de pilotage 4, tel une modification des paramétrages du parcours et de pose du matériau d'impression.

Il est à noter que le dispositif d'impression en trois dimensions selon l'invention peut être construit en utilisant des systèmes rotatifs d'induction, d'apport de gaz, de fils ou ruban et donc comprendre des systèmes rotatifs autour de la zone de dépôt 40 et donc du tube de descente du fil ou autour de la buse de projection de poudre.

Le dispositif d'impression en trois dimensions selon l'invention peut être monté dans leur globalité ou seulement certaines parties sur un bras ou un ensemble multiaxe. De ce fait, les dispositifs d'impression en trois dimensions selon l'invention peuvent être interchangés pendant la construction de la pièce en construction.

Il est possible d'assembler, avec un dispositif d'impression en trois dimensions selon l'invention, deux ou plus pièces existantes devant être associées ou soudées ensemble. En complément, le dispositif d'impression en trois dimensions selon l'invention peut apporter un complément d'impression aux pièces ainsi assemblées. Le complément d'impression peut être déterminé, suite à l'assemblage des pièces, à l'aide d'un système de scanner tridimensionnel. Une fois l'assemblage des pièces réalisé, le dispositif d'impression en trois dimensions selon l'invention effectue une reconstruction tridimensionnelle de l'assemblage à l'aide du système de scanner tridimensionnel, puis il compare la reconstruction ainsi réalisée avec un modèle de l'objet final à obtenir afin de déterminer le complément d'impression à apporter à l'assemblage des pièces. En variante, si le dispositif d'impression en trois dimensions selon l'invention comporte des moyens d'usinage, il est alors possible de rectifier si nécessaire l'assemblage des pièces réalisées, suite à une comparaison entre la reconstruction tridimensionnelle avec le modèle de l'objet final.

Bien entendu, il est possible d'apporter à l'invention de nombreuses modifications sans pour autant sortir cadre de celle-ci.

## Revendications

1. Dispositif d'impression en trois dimensions d'une pièce à réaliser (29) comprenant une tête d'impression (11,110) comportant :
- des moyens d'alimentation (2, 14, 15, 16, 17, 18, 22, 25, 50) en un matériau d'impression ferromagnétique ;
- des moyens (12, 9, 6, 27, 34, 28) permettant la fusion du matériau d'impression avant pose ;
**caractérisé en ce que** les moyens permettant la fusion comprennent un premier moyen de chauffage par induction (12, 27) du matériau d'impression, et
**en ce que** ledit dispositif d'impression (29) comporte en outre :
- une première buse de diffusion de gaz inerte (13) au niveau d'une sortie (141;261) des moyens d'alimentation ;
- une deuxième buse de diffusion de gaz inerte (51) au niveau d'un point de contact du matériau d'impression en fusion d'une surface de réception (40) de la pièce à réaliser en cours d'élaboration permettant un apport du gaz à une pression souhaitée, la deuxième buse de diffusion de gaz inerte (51) fournissant un circuit de diffusion du gaz autour de la partie extérieure du premier moyen de chauffage par induction (12, 27), permettant de disposer d'une atmosphère contrôlée de gaz inerte autour de la tête d'impression (11, 110), la première buse de diffusion de gaz (13) ainsi que le premier moyen de chauffage par induction (12, 27) se trouvant donc à l'intérieur d'un nouveau réseau de gaz inerte.

2. Dispositif selon la revendication 1, **caractérisé en ce que** le premier moyen de chauffage par induction est agencé de sorte à permettre un chauffage d'une surface de dépose du matériau d'impression en fusion de la pièce à réaliser en cours d'élaboration.

3. Dispositif selon l'une des revendications 1 et 2 **caractérisé en ce que** les moyens permettant la fusion comportent un deuxième moyen de chauffage par induction (28) d'une surface de dépose du matériau d'impression en fusion de la pièce à réaliser en cours d'élaboration.

4. Dispositif selon l'une des revendications 1 à 3, **caractérisé en ce que** le premier et/ou le deuxième moyen de chauffage par induction entoure une sortie des moyens d'alimentation en matériau d'impression.

5. Dispositif selon l'une des revendications 1 à 3, **caractérisé en ce que** le premier et/ou le deuxième moyen de chauffage par induction s'étend uniquement devant une sortie des moyens d'alimentation en matériau d'impression et présente une forme de « U » à 90° d'un sens d'avancée de la tête d'impression en utilisation.

6. Dispositif selon l'une des revendications 1 à 3, **caractérisé en ce que** le premier et/ou le deuxième moyen de chauffage par induction présente une forme en fer à cheval se positionnant devant et en partie autour d'une sortie des moyens d'alimentation en matériau d'impression.

7. Dispositif selon l'une des revendications 5 et 6 **caractérisé en ce que** les premier et/ou deuxième moyens de chauffage par induction sont positionnées devant et/ou derrière et/ou sur les côtés des moyens d'alimentation en un matériau d'impression.

8. Dispositif selon l'une des revendications 1 à 3, **caractérisé en ce que** le premier et/ou le deuxième moyen de chauffage par induction est agencé de sorte à permettre une dépose du matériau d'impression sous un angle d'incidence quelconque.

9. Dispositif selon l'une des revendications 1 à 8, **caractérisé en ce que** les moyens permettant la fusion comprennent un moyen d'alimentation en courant (6) dont une borne est connectée au matériau d'impression et une autre borne est connectée à la pièce à réaliser en cours d'élaboration.

10. Dispositif selon l'une des revendications 1 à 9, **caractérisé en ce que** les moyens d'alimentation en matériau d'impression comprennent un ou plusieurs conduits d'amenée de matériau d'impression.

11. Dispositif d'impression selon l'une des revendications 1 à 10, **caractérisé en ce qu'**il comporte deux ou plus têtes d'impression.

12. Dispositif selon l'une des revendications 1 à 8 et 10 et 11, **caractérisé en ce que** le matériau d'impression est sous la forme d'une poudre.

13. Dispositif selon la revendication 12, **caractérisé en ce que** les moyens d'alimentation en matériau d'impression comportent une buse de projection (26) de poudre.

14. Dispositif selon l'une des revendications 12 et 13, **caractérisé en ce que** la poudre formant le matériau d'impression est propulsé par un gaz inerte.

15. Dispositif selon l'une des revendications 1 à 11, **caractérisé en ce que** le matériau d'impression est sous la forme d'un fil.

16. Dispositif selon la revendication 15, **caractérisé en ce que** le matériau d'impression est un matériau ferromagnétique et ou magnéto-diélectrique.

17. Dispositif selon l'une des revendications 1 à 16, **caractérisé en ce que** la tête d'impression comporte des moyens d'apport d'un matériau de renfort sous la forme d'un fil ou d'un ruban (58,59,70,77,64,63) agencés de sorte à poser le matériau de renfort sur une surface de dépose du matériau d'impression en fusion de la pièce à réaliser en cours d'élaboration, en amont d'un point de dépose du matériau d'impression en fusion de la surface de dépose.

18. Dispositif selon l'une des revendications 1 à 17, **caractérisé en ce que** la première buse de diffusion de gaz inerte est agencée de sorte à être orientable, notamment afin de pouvoir orienter un flux de gaz inerte dans un sens d'avancée de la tête d'impression.

19. Dispositif selon l'une des revendications 1 à 18, **caractérisé en ce que** les moyens d'alimentation en matériau et/ou les moyens d'apport d'un matériau de renfort comprennent des moyens de mise sous gaz inerte des matériaux en utilisation.

20. Dispositif selon l'une des revendications 1 à 19, **caractérisé en ce qu'**il comporte des moyens de régulation (19,21,21') de diffusion de gaz inerte.

21. Dispositif selon l'une des revendications 1 à 20, **caractérisé en ce qu'**il comporte des moyens de refroidissement de tout ou partie de la tête d'impression.

22. Dispositif selon l'une des revendications 1 à 21, **caractérisé en ce que** les moyens permettant la fusion du matériau d'impression, la première buse de diffusion de gaz inerte et la deuxième buse de diffusion de gaz inerte sont montés mobiles par rapport aux moyens d'alimentation en matériau d'impression.

23. Dispositif selon l'une des revendications 1 à 22, **caractérisé en ce qu'**il comporte un ou plusieurs inducteurs associés à un ou plusieurs dispositifs d'induction positionnés soit devant, derrière, sur les côtés de la tête d'impression.

24. Utilisation d'un dispositif selon l'une des revendications 1 à 23 pour assembler deux ou plus pièces existante par une dépose de matériau d'impression à une jonction entre les deux ou plus pièces.

## Patentansprüche

1. Vorrichtung zum dreidimensionalen Drucken eines herzustellenden Werkstücks (29), umfassend einen Druckkopf (11, 110), welcher umfasst:
- Mittel zum Zuführen (2, 14, 15, 16, 17, 18, 22, 25, 50) eines ferromagnetischen Druckmaterials;
- Mittel (12, 9, 6, 27, 34, 28), die das Schmelzen des Druckmaterials vor Aufbringung ermöglichen;
**dadurch gekennzeichnet, dass** die Mittel, die das Schmelzen ermöglichen, ein erstes Mittel (12, 27) zum Erhitzen des Druckmaterials durch Induktion umfassen, und
dadurch, dass die Druckvorrichtung (29) weiter umfasst:
- eine erste Inertgas-Verteilerdüse (13) im Bereich eines Auslasses (141; 261) der Zuführmittel;
- eine zweite Inertgas-Verteilerdüse (51) im Bereich eines Berührungspunktes des geschmolzenen Druckmaterials mit einer Aufnahmefläche (40) des in Ausarbeitung befindlichen herzustellenden Werkstücks, die einen Eintrag des Gases mit einem gewünschten Druck ermöglicht, wobei die zweite Inertgas-Verteilerdüse (51) einen Verteilkreis des Gases um den äußeren Teil des ersten Induktionsheizmittels (12, 27) herum bereitstellt, der es ermöglicht, eine kontrollierte Inertgasatmosphäre um den Druckkopf (11, 110) herum anzuordnen, wobei sich die erste Gasverteilerdüse (13) sowie das erste Induktionsheizmittel (12, 27) somit im Inneren eines neuen Inertgasnetzes befinden.

2. Vorrichtung nach Anspruch 1, **dadurch gekennzeichnet, dass** das erste Induktionsheizmittel so eingerichtet ist, dass es ein Erhitzen einer Fläche zum Auftragen des geschmolzenen Druckmaterials des in Ausarbeitung befindlichen herzustellenden Werkstücks ermöglicht.

3. Vorrichtung nach einem der Ansprüche 1 und 2, **dadurch gekennzeichnet, dass** die Mittel, die das Schmelzen ermöglichen, ein zweites Induktionsheizmittel (28) einer Fläche zum Auftragen des geschmolzenen Druckmaterials des in Ausarbeitung befindlichen herzustellenden Werkstücks umfassen.

4. Vorrichtung nach einem der Ansprüche 1 bis 3, **dadurch gekennzeichnet, dass** das erste und/oder das zweite Induktionsheizmittel einen Auslass der Druckmaterial-Zuführmittel umgibt.

5. Vorrichtung nach einem der Ansprüche 1 bis 3, **dadurch gekennzeichnet, dass** sich das erste und/oder das zweite Induktionsheizmittel ausschließlich vor einem Auslass der Druckmaterial-Zuführmittel erstreckt und eine « U »-Form in 90° zu einer Vorschubrichtung des Druckkopfs in Gebrauch aufweist.

6. Vorrichtung nach einem der Ansprüche 1 bis 3, **dadurch gekennzeichnet, dass** das erste und/oder das zweite Induktionsheizmittel eine Hufeisenform aufweist, die sich vor und zum Teil um einen Auslass der Druckmaterial-Zuführmittel herum positioniert.

7. Vorrichtung nach einem der Ansprüche 5 und 6, **dadurch gekennzeichnet, dass** das erste und/oder zweite Induktionsheizmittel vor und/oder hinter und/oder an den Seiten der Druckmaterial-Zuführmittel positioniert sind.

8. Vorrichtung nach einem der Ansprüche 1 bis 3, **dadurch gekennzeichnet, dass** das erste und/oder das zweite Induktionsheizmittel so eingerichtet ist, dass es ein Auftragen des Druckmaterials unter einem beliebigen Auftreffwinkel ermöglicht.

9. Vorrichtung nach einem der Ansprüche 1 bis 8, **dadurch gekennzeichnet, dass** die Mittel, die das Schmelzen ermöglichen, ein Stromzuführmittel (6) umfassen, von dem eine Klemme mit dem Druckmaterial verbunden ist, und eine andere Klemme mit dem in Ausarbeitung befindlichen herzustellenden Werkstück verbunden ist.

10. Vorrichtung nach einem der Ansprüche 1 bis 9, **dadurch gekennzeichnet, dass** die Druckmaterial-Zuführmittel eine oder mehrere Druckmaterial-Speiseleitungen umfassen.

11. Druckvorrichtung nach einem der Ansprüche 1 bis 10, **dadurch gekennzeichnet, dass** sie zwei oder mehr Druckköpfe umfasst.

12. Vorrichtung nach einem der Ansprüche 1 bis 8 und 10 und 11, **dadurch gekennzeichnet, dass** das Druckmaterial in der Form eines Pulvers vorliegt.

13. Vorrichtung nach Anspruch 12, **dadurch gekennzeichnet, dass** die Druckmaterial-Zuführmittel eine Pulversprühdüse (26) umfassen.

14. Vorrichtung nach einem der Ansprüche 12 und 13, **dadurch gekennzeichnet, dass** das Pulver, welches das Druckmaterial bildet, von einem Inertgas mitgetragen wird.

15. Vorrichtung nach einem der Ansprüche 1 bis 11, **dadurch gekennzeichnet, dass** das Druckmaterial in der Form eines Drahtes vorliegt.

16. Vorrichtung nach Anspruch 15, **dadurch gekennzeichnet, dass** das Druckmaterial ein ferromagnetisches und/oder magneto-dielektrisches Material ist.

17. Vorrichtung nach einem der Ansprüche 1 bis 16, **dadurch gekennzeichnet, dass** der Druckkopf Mittel zum Eintragen eines Verstärkungsmaterials in der Form eines Drahtes oder eines Bandes (58, 59, 70, 77, 64, 63) umfasst, die so eingerichtet sind, dass sie das Verstärkungsmaterial auf eine Auftragsfläche des geschmolzenen Druckmaterials des in Ausarbeitung befindlichen herzustellenden Werkstücks stromaufwärts eines Auftragspunkts des geschmolzenen Druckmaterials der Auftragsfläche aufbringen.

18. Vorrichtung nach einem der Ansprüche 1 bis 17, **dadurch gekennzeichnet, dass** die erste Inertgas-Verteilerdüse so eingerichtet ist, dass sie ausrichtbar ist, insbesondere um einen Inertgasstrom in eine Vorschubrichtung des Druckkopfes ausrichten zu können.

19. Vorrichtung nach einem der Ansprüche 1 bis 18, **dadurch gekennzeichnet, dass** die Materialzuführmittel und/oder die Mittel zum Eintragen eines Verstärkungsmaterials Mittel zum Bringen der Materialien in Gebrauch unter Inertgas umfassen.

20. Vorrichtung nach einem der Ansprüche 1 bis 19, **dadurch gekennzeichnet, dass** sie Inertgasverteilungs-Reguliermittel (19, 21, 21') umfasst.

21. Vorrichtung nach einem der Ansprüche 1 bis 20, **dadurch gekennzeichnet, dass** sie Mittel zum Kühlen des gesamten oder eines Teils des Druckkopfs umfasst.

22. Vorrichtung nach einem der Ansprüche 1 bis 21, **dadurch gekennzeichnet, dass** die Mittel, die das Schmelzen des Druckmaterials ermöglichen, die erste Inertgas-Verteilerdüse und die zweite Inertgas-Verteilerdüse in Bezug auf die Druckmaterial-Zuführmittel beweglich montiert sind.

23. Vorrichtung nach einem der Ansprüche 1 bis 22, **dadurch gekennzeichnet, dass** sie eine oder mehrere Induktoren umfasst, die einer oder mehreren Induktionsvorrichtungen zugeordnet sind, welche entweder vor, hinter, an den Seiten des Druckkopfs positioniert sind.

24. Verwendung einer Vorrichtung nach einem der Ansprüche 1 bis 23, um zwei oder mehr vorhandene Werkstücke durch ein Auftragen von Druckmaterial an einer Stoßstelle zwischen den zwei oder mehr Werkstücken zusammenzufügen.

## Claims

1. Device for the three-dimensional printing of a part to be produced (29), comprising a print head (11, 110) comprising:
- means (2, 14, 15, 16, 17, 18, 22, 25, 50) for supplying a ferromagnetic printing material;
- means (12, 9, 6, 27, 34, 28) for melting the printing material before placing;
**characterised in that** the melting means comprise a first means (12, 27) for heating the printing material by induction, and
**in that** said printing device (29) further comprises:
- a first nozzle (13) for dispensing inert gas at an outlet (141; 261) of the supply means;
- a second nozzle (51) for dispensing inert gas at a point of contact of the molten printing material on a reception surface (40) of the part to be produced during production, providing a supply of gas at a required pressure, the second inert-gas dispensing nozzle (51) providing a circuit for dispensing gas around the external part of the first induction heating means (12, 27), making it possible to have a controlled inert-gas atmosphere around the print head (11, 110), the first gas-dispensing nozzle (13) and the first induction heating means (12, 27) therefore being situated inside a novel inert-gas system.

2. Device according to claim 1, **characterised in that** the first induction heating means is arranged so as to allow heating of a surface of the part to be produced in the course of production for depositing the molten printing material.

3. Device according to either claim 1 or claim 2, **characterised in that** the melting means comprise a second means (28) for the induction heating of a surface of the part to be produced in the course of production for depositing molten printing material.

4. Device according to any of claims 1 to 3, **characterised in that** the first and/or second induction heating means surrounds an outlet of the printing material supply means.

5. Device according to any of claims 1 to 3, **characterised in that** the first and/or second induction heating means extends solely in front of an outlet of the printing material supply means and has a U shape at 90° from a direction of travel of the print head in use.

6. Device according to any of claims 1 to 3, **characterised in that** the first and/or second induction heating means has a horseshoe shape positioned in front of and partly around an outlet of the printing material supply means.

7. Device according to either of claim 5 or claim 6, **characterised in that** the first and/or second induction heating means are positioned in front of and/or behind and/or on the sides of the printing material supply means.

8. Device according to any of claims 1 to 3, **characterised in that** the first and/or second induction heating means is arranged so as to allow a depositing of printing material at any angle of incidence.

9. Device according to any of claims 1 to 8, **characterised in that** the melting means comprise a current-supply means (6), one terminal of which is connected to the printing material and another terminal of which is connected to the part to be produced in the course of production.

10. Device according to any of claims 1 to 9, **characterised in that** the printing material supply means comprise one or more printing material feed pipes.

11. Printing device according to any of claims 1 to 10, **characterised in that** it comprises two or more print heads.

12. Device according to any of claims 1 to 8 and 10 and 11, **characterised in that** the printing material is in the form of a powder.

13. Device according to claim 12, **characterised in that** the printing material supply means comprise a powder spray nozzle (26).

14. Device according to either claim 12 or claim 13, **characterised in that** the powder forming the printing material is propelled by an inert gas.

15. Device according to any of claims 1 to 11, **characterised in that** the printing material is in the form of a wire.

16. Device according to claim 15, **characterised in that** the printing material is a ferromagnetic and/or magnetodielectric material.

17. Device according to any of claims 1 to 16, **characterised in that** the print head comprises means for supplying a reinforcement material in the form of a wire or ribbon (58, 59, 70, 77, 64, 63) arranged so as to place the reinforcement material on a surface of the part to be produced in the course of production for depositing molten printing material, upstream of a point on the deposition surface for depositing molten printing material.

18. Device according to any of claims 1 to 17, **characterised in that** the first inert-gas dispensing nozzle is arranged so as to be orientable, in particular in order to be able to orient an inert gas flow in a direction of travel of the print head.

19. Device according to any of claims 1 to 18, **characterised in that** the means for supplying material and/or the means for supplying a reinforcement material comprise means for putting the materials in use under inert gas.

20. Device according to any of claims 1 to 19, **characterised in that** it comprises means (19, 21, 21') for regulating inert-gas dispensing.

21. Device according to any of claims 1 to 20, **characterised in that** it comprises means for cooling all or part of the print head.

22. Device according to any of claims 1 to 21, **characterised in that** the means providing melting of the printing material, the first inert-gas dispensing nozzle and the second inert-gas dispensing nozzle are mounted so as to be able to move with respect to the printing material supply means.

23. Device according to any of claims 1 to 22, **characterised in that** it comprises one or more inductors associated with one or more induction devices positioned either in front of, behind or on the sides of the print head.

24. Use of a device according to any of claims 1 to 23 for assembling two or more existing parts by a deposition of printing material at a junction between the two or more parts.
